# EUROPEAN PATENT APPLICATION

(11) **EP 4 625 801 A1**
(43) Date of publication of application: **01.10.2025**
(21) Application number: 25165133.7
(22) Date of filing: 20.03.2025
(51) Int. Cl.: H02M 3/335, H02M 1/00

(54) **PROGRAMMABLE SWITCHING REGULATOR**

(30) Priority: 28.03.2024 IN 202411025333
(71) Applicant: Hamilton Sundstrand Corporation, Charlotte, NC 28217-4578 (US)
(72) Inventor: KUMAR, Manish, 560066 Bangalore, Karnataka (IN); KALLURI, Nageswara Rao, 500016 Bangalore, Karnataka (IN); GHOSE, Tanay, 700064 Kolkata, West Bengal (IN); Banahatti, Bapu Kallappa, 560078 Bangalore, Karnataka (IN)
(74) Representative: Dehns

(57) **Abstract**

A voltage regulator is provided including a pulse width modulation controller configured to control an output voltage of a power supply and a programmable device (110) configured to monitor the output voltage of the power supply. The programmable device (110) is configured to assume control of the output voltage of the power supply based on a comparison by the programmable device (110) of the output voltage of the power supply to one or more criteria. The programmable device (110) assumes control of the output voltage by producing a replica of the output signal provided by the pulse width modulation controller, which is fed from the secondary side to the primary side of the voltage regulator.

## Description

### CROSS-REFERENCE TO RELATED APPLICATIONS

This application claims the benefit of Indian Provisional Application No. 202411025333 filed March 28, 2024.

### BACKGROUND

The present disclosure relates to switching regulators and, in particular, to a programmable switching regulator.

In some systems, voltage converters (e.g., DC-DC converters) included in the systems may be heavily dependent on pulse width modulation (PWM) controllers which are vendor provided. Accordingly, for example, the dependence on such vendor provided PWM controllers may inhibit the prognostics and health monitoring capabilities of systems which utilize the PWM controllers. In some cases, the performance of a voltage converter (e.g., DC-DC converter) may be heavily dependent on a selected IC for implementing a PWM controller of the voltage converter. For example, the performance may be dependent on variations in passive components and variations in temperature.

### BRIEF DESCRIPTION

According to one or more embodiments of the present disclosure, a voltage regulator is provided including: a pulse width modulation controller configured to control an output voltage of a power supply; and a programmable device configured to monitor the output voltage of the power supply, wherein the programmable device is configured to assume control of the output voltage of the power supply based on a comparison by the programmable device of the output voltage of the power supply to one or more criteria.

In any one or combination of the embodiments described herein, the one or more criteria includes a threshold voltage.

**In** any one or combination of the embodiments described herein, the one or more criteria includes a threshold voltage stability.

**In** any one or combination of the embodiments described herein, in association with the programmable device assuming control of the output voltage of the power supply, the programmable device is configured to: generate a second pulse width modulation signal synchronized with a first pulse width modulation signal generated by the pulse width modulation controller; and control the output voltage of the power supply based on the second pulse width modulation signal.

**In** any one or combination of the embodiments described herein, the second pulse width modulation signal and the first pulse width modulation signal are synchronized according to frequency, duty cycle, or both.

**In** any one or combination of the embodiments described herein, in association with the programmable device assuming control of the output voltage of the power supply, the programmable device is configured to: output a control signal to the pulse width modulation controller, wherein the pulse width modulation controller is configured to refrain from controlling the output voltage of the power supply, based on the control signal.

**In** some aspects, the techniques described herein relate to a voltage regulator, wherein: the pulse width modulation controller controlling the output voltage of the power supply is associated with an active state of the pulse width modulation controller; and the pulse width modulation controller refraining from controlling the output voltage of the power supply is associated with a standby state of the pulse width modulation controller.

**In** some aspects, the techniques described herein relate to a voltage regulator, further including a current sensing device configured to provide a sensed current associated with providing the output voltage, wherein the programmable device is configured to generate or modify a pulse width modulation signal associated with controlling the output voltage of the power supply, based on the sensed current.

**In** some aspects, the techniques described herein relate to a voltage regulator, further including: an analog-to-digital conversion circuit configured to generate a digital representation of the sensed current, wherein the programmable device is configured to generate or modify the pulse width modulation signal based on the digital representation.

**In** any one or combination of the embodiments described herein, the programmable device is configured to refrain from controlling the output voltage of the power supply based on the comparison by the programmable device of the output voltage of the power supply to the one or more criteria.

**In** any one or combination of the embodiments described herein, the programmable device controlling the output voltage of the power supply is associated with an active state of the programmable device; and the programmable device refraining from controlling the output voltage of the power supply is associated with a standby state of the programmable device.

**In** any one or combination of the embodiments described herein, the voltage regulator further includes a transformer configured to generate the output voltage based on an input voltage received at the voltage regulator, wherein: the pulse width modulation controller is associated with a primary side of the transformer; and the programmable device is associated with a secondary side of the transformer.

According to one or more embodiments of the present disclosure, an apparatus is provided including: a voltage regulator including: a pulse width modulation controller configured to control an output voltage of a power supply; and a programmable device configured to monitor the output voltage of the power supply, wherein the programmable device is configured to assume control of the output voltage of the power supply based on a comparison by the programmable device of the output voltage of the power supply to one or more criteria.

**In** any one or combination of the embodiments described herein, the apparatus further includes a control device configured to control one or more functions of the apparatus, wherein the programmable device is included in a portion of the control device.

According to one or more embodiments of the present disclosure, a method is provided including: controlling, by a pulse width modulation controller of a voltage regulator, an output voltage of a power supply; monitoring, by a programmable device of the power supply, the output voltage of the power supply; comparing, by the programmable device, the output voltage of the power supply to one or more criteria; and assuming control of the output voltage of the power supply, by the programmable device, based on the comparing.

In any one or combination of the embodiments described herein, the one or more criteria includes at least one of: a threshold voltage; and a threshold voltage stability.

In any one or combination of the embodiments described herein, the method further includes, in association with assuming control of the output voltage of the power supply by the programmable device: generating, by the programmable device, a second pulse width modulation signal synchronized with a first pulse width modulation signal generated by the pulse width modulation controller; and controlling, by the programmable device, the output voltage of the power supply based on the second pulse width modulation signal.

In any one or combination of the embodiments described herein, the method further includes, in association with assuming control of the output voltage of the power supply by the programmable device: outputting, by the programmable device, a control signal to the pulse width modulation controller; and refraining from controlling the output voltage of the power supply, by the pulse width modulation controller, based on the control signal.

In any one or combination of the embodiments described herein, the method further includes: providing, by a current sensing device, a sensed current associated with providing the output voltage; and generating or modifying, by the programmable device, a pulse width modulation signal associated with controlling the output voltage of the power supply, based on the sensed current.

In any one or combination of the embodiments described herein, the method further includes refraining, by the programmable device, from controlling the output voltage of the power supply based on the comparing of the output voltage of the power supply to the one or more criteria.

Additional features and advantages are realized through the techniques of the present disclosure. Other embodiments and aspects of the disclosure are described in detail herein and are considered a part of the claimed technical concept. For a better understanding of the disclosure with the advantages and the features, refer to the description and to the drawings.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.
FIG. 1 illustrates an example system in accordance with one or more embodiments of the present disclosure.
FIG. 2 illustrates an example flowchart of a method in accordance with one or more embodiments of the present disclosure.

### DETAILED DESCRIPTION

A detailed description of one or more embodiments of the disclosed apparatus and method are presented herein by way of exemplification and not limitation with reference to the Figures.

Electronic products may include a power source for operating internal circuitry of the electronic products. In some cases, the electronic products may include isolated switching regulators provide power. For example, some designers may rely on pulse width modulation (PWM) controller ICs available in the market to create power supplies for the electronic products, which may be negatively impacted by various drawbacks.

An example drawback is vendor dependence. For example, a given PWM controller may be tied to specific vendors, limiting design options and flexibility. Another example drawback is limited features of PWM controllers. For example, the features of a given PWM controller may be confined to the selected IC for the switching regulator, restricting the capabilities of the power supply.

Another example drawback is absence of prognostics and health monitoring. For example, other PWM controllers lack prognostics and health monitoring, and a system implementing such PWM controllers accordingly lacks the ability to predict issues or monitor system health over time.

Another example drawback is constraints in switching frequency control. For example, some other PWM regulators have limitations in controlling switching frequency during duty cycle adjustments. Accordingly, for example, such PWM regulators are unable to implement opportunities for achieving an adjustable electromagnetic interference (EMI) spectrum without requiring hardware modifications for better EMI-EMC compliance. Such PWM regulators are unable to implement opportunities for selecting more cost-effective and easily available components for the system.

According to one or more embodiments of the present disclosure, systems and techniques are described herein which support power supply regulation for mitigating the above described problems by leveraging an existing programmable device (e.g., an FPGA, a microcontroller unit (MCU)).

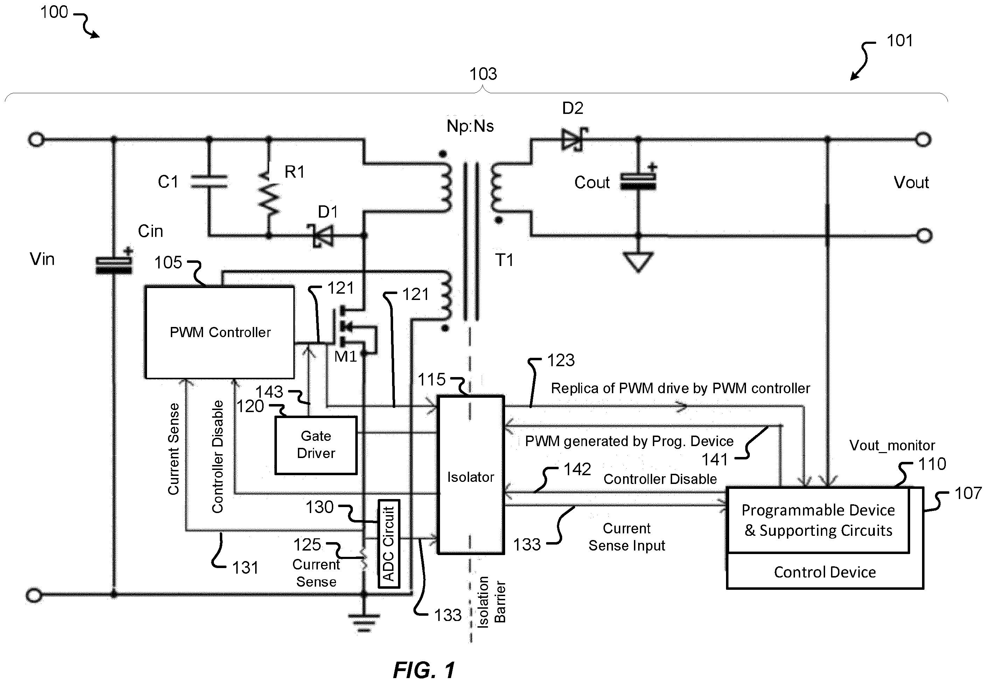

FIG. 1 illustrates an example system 100 in accordance with one or more embodiments of the present disclosure. In an example, the system 100 may be, for example, the system of an electronic device. The system 100 includes a power supply 101. The power supply 101 may include a switching regulator 103 (also referred to herein as a voltage regulator), example aspects of which are described herein. Embodiments of the present disclosure are not limited to the features illustrated at FIG. 1, and it is to be understood that the power supply 101 and switching regulator 103 may include other components supportive of features or operations of the electronic device.

In the example described herein, the switching regulator 103 is a DC-DC voltage converter. However, aspects of the present disclosure are not limited to DC-DC voltage conversion. For example, aspects of the switching regulator 103 described herein may be applied to an AC-DC converter (also referred to herein as a rectifier), a DC-AC converter (also referred to herein as an inverter), and/or an AC-AC frequency converter (also referred to herein as a transformer).

In accordance with one or more embodiments of the present disclosure, the systems and techniques described herein support a hybrid approach of controlling the power supply 101 and the switching regulator 103. The system 100 and techniques described herein include leveraging a PWM controller 105 and a programmable device 110. The PWM controller 105 may be a general PWM controller. In some aspects, the PWM controller 105 may be a dedicated PWM controller chip capable of controlling one or more functions associated with the power supply 101 and the switching regulator 103.

In some aspects, the programmable device 110 may be implemented by a portion of (e.g., programmable circuitry included) in a control device 107 associated with the system 100. For example, the control device 107 may support intelligent control of operations of the system 100. In some cases, the operations may be associated with an electronic device (e.g., an electronic product) (not illustrated) including the system 100.

In an example, the programmable device 110 may be a field programmable gate array (FPGA) or a microcontroller unit (MCU). In some aspects the programmable device 110 may be implemented by a portion of the FPGA or MCU. For example, in some aerospace products, FPGAs and/or MCUs are underutilized, in which resource/bandwidth utilization ranges from 30% to 40%. The system 100 and techniques described herein may advantageously utilize the remaining resource/bandwidth to implement algorithms described herein associated with controlling functions of the power supply 101 and the switching regulator 103. For example, aspects of the present disclosure support implementations leveraging existing components (e.g., a PWM controller in combination with unused or non-allocated portions of an FPGA or an MCU) in an electronics product to attain improved performance and monitoring capability.

Devices (e.g., switching regulator 103, PWM controller 105, programmable device 110, or the like) of the system 100 may include processing circuitry capable of executing instructions stored on a memory of the devices (or a memory electrically coupled to the devices) in association with performing one or more functions described herein.

As will be illustrated herein, aspects of the power supply 101 and the switching regulator 103 support advancements in power supply design such as, for example, overcoming vendor dependency, enhanced prognostics and health monitoring, and dynamic control of EMI emission spectrum.

The switching regulator 103 includes a PWM controller 105, a control device 107 (including programmable device 110), an isolator 115, a gate driver 120, a current sense resistor 125, an analog-to-digital conversion (ADC) circuit 130, and a transformer T1 of a device ratio ofNp:Ns. Some example aspects described herein refer to a primary side of the transformer T1 (e.g., left side of the transformer T1 and the isolator 115 in FIG. 1) and a secondary side of the transformer T1 (e.g., right side of the transformer T1 and the isolator 115 in FIG. 1). The PWM controller 105 may be referred to as a primary side PWM controller, and the programmable device 110 may be referred to as a secondary side PWM controller.

The switching regulator 103 further includes an input capacitor Cin, a snubber circuit (e.g., including diode D1, resistor R1, and capacitor C1), and a MOSFET M1. A diode D2 and an output capacitor Cout may be associated with the power supply 101. The resistor R1 and the capacitor C1 are coupled to an input terminal for receiving the input voltage Vin, a terminal of the input capacitor Cin, and a terminal of the primary side of the transformer T1. The resistor R1 and the capacitor C1 are further coupled to the diode D1, and the diode D1 is further coupled to another terminal of the primary side of the transformer T1.

The drain of the MOSFET M1 is coupled to the diode D1 and the other terminal of the primary side of the transformer T1. The source of the MOSFET M1 is coupled to the current sense resistor 125, the ADC circuit 130, and the PWM controller 105. The gate of the MOSFET M1 is coupled to the PWM controller 105, the isolator 115, and the gate driver 120.

The input capacitor Cin (at another terminal of the input capacitor Cin) and the current sense resistor 125 are further coupled to a ground GND associated with the primary side of the transformer T1 and the input voltage Vin.

The diode D2 is coupled to a terminal of the secondary side of the transformer T1 and an output terminal for providing the output voltage Vout. The output capacitor Cout is coupled to the diode D2, another terminal of the secondary side of the transformer T1, the output terminal for providing the output voltage Vout, and a ground GND2 associated with the secondary side of the transformer T1 and the output voltage Vout.

In some aspects the switching regulator 103 may provide functionality of a flyback regulator. For example, based on the application of an input voltage Vin, the switching regulator 103 may generate and provide an output voltage Vout through a flyback operation governed by PWM controller 105. In accordance with one or more embodiments of the present disclosure, the output voltage Vout may be a regulated voltage. In some cases, the output voltage Vout may have some voltage variation.

In accordance with one or more embodiments of the present disclosure as described herein, the power supply 101 may support a control mechanism in which the programmable device 110 assumes control of the power supply 101 and the switching regulator 103. Descriptions herein with respect to the control of the power supply 101 include control of the switching regulator 103.

A startup sequence associated with the power supply 101 (and switching regulator 103) and a subsequent assumption of control by the programmable device 110 are described herein. In an example, the startup sequence may employ PWM controller 105 for controlling the power supply 101 until the output voltage Vout satisfies one or more criteria. The one or more criteria may include, for example, a threshold voltage sufficient for powering the programmable device 110 (e.g., 3.3V or any voltage suitable for the powering components of the system 100). Additionally, or alternatively, the one or more criteria may include a threshold voltage stability associated with the output voltage Vout.

In an example, when the output voltage Vout increases to a value greater than or equal to the threshold voltage, the programmable device 110 may seamlessly assume control over the power supply 101 (and the switching regulator 103). In some alternative and/or additional embodiments, the programmable device 110 may refrain from assuming control over the power supply 101 until the output voltage Vout satisfies the threshold voltage stability. It is to be understood that the examples described herein with reference to the programmable device 110 assuming control of the power supply 101 and/or returning control of the power supply 101 to the PWM controller 105 may be based on the threshold voltage and/or the threshold voltage stability described herein. The programmable device 110 may assume or relinquish control over the power supply 101 based on a comparison by the programmable device 110 of the output voltage Vout to one or more criteria (e.g., threshold voltage, threshold voltage stability).

For example, the switching regulator 103 is configured such that the PWM controller 105 may provide a gate drive signal 121 both to the MOSFET M1 (also referred to herein as a primary-side MOSFET) of the PWM controller 105 and to (e.g., via isolator 115) the programmable device 110. The gate drive signal 121 may be, for example, a PWM signal associated with controlling the output voltage Vout. In the example of FIG. 1, the isolator 115 may provide a signal 123 to the programmable device 110 based on the gate drive signal 121 generated by the PWM controller 105, in which the signal 123 is a replica of the gate drive signal 121.

The programmable device 110 may analyze the signal 123. The programmable device 110 may quickly (e.g., within a time duration less than a threshold duration) synchronize the frequency and duty cycle of a PWM generated Y (or to be generated by) the programmable device 110 with the received signal 123. The programmable device 110 may output a control signal 141 via a dedicated output pin of the programmable device 110, in which the control signal 141 is of the frequency and duty cycle. The control signal 141 may be referred to as a PWM signal generated by the programmable device 110, in which the control signal 141 is a replica of the gate drive signal 121 provided by the PWM controller 105. Accordingly, for example, the programmable device 110 assumes control of the output voltage Vout by producing a replica (e.g., control signal 141) of the output signal (e.g., gate drive signal 121) provided by PWM controller 105, which is fed from the secondary side to the primary side of the switching regulator 103.

Via the control signal 141, the programmable device 110 may drive the MOSFET M1. For example, the programmable device 110 may drive the MOSFET M1 via the isolator 115 (or another isolator 115 (not illustrated)). That is, for example, the programmable device 110 may provide the control signal 141 to the gate driver 120 via the isolator 115, and the gate driver 120 may provide a corresponding signal (e.g., a high current gate drive 143 corresponding to the control signal 141) to the MOSFET M1.

Accordingly, for example, the programmable device 110 may assume or take over control of the switching regulator 103, via the gate driver 120. That is, for example, the power supply 101 may support features for disabling the PWM controller 105 once full control of the power supply 101 by the programmable device 110 is established. In an example, the programmable device 110 may generate and output a control signal 142 (also referred to herein as a controller enable/disable signal) associated with disabling the PWM controller 105, via a separate output pin of the programmable device 110. The programmable device 110 may provide the control signal 142 to the PWM controller 105, via the isolator 115. In an example of disabling the PWM controller 105, the programmable device 110 may provide the control signal 142 according to a logic level (e.g., a logic level high) associated with disabling the PWM controller 105.

In an example, the programmable device 110 may output the control signal 142 after providing the control signal 141 to the gate driver 120 via the isolator 115. In another example, the programmable device 110 may output the control signal 142 substantially simultaneous to providing the control signal 141 to the gate driver 120 via the isolator 115. The term "substantially," as used herein, means approximately or actually. The term "substantially simultaneous," as used herein, means approximately or actually at the same time (e.g., within a threshold difference amount).

The programmable device 110 may continuously monitor the output voltage Vout and implement closed-loop feedback control associated with maintaining precise regulation of parameters (e.g., output voltage Vout, current, and the like) of the power supply 101. In some aspects, the programmable device 110 establishes a closed-loop control system in which the programmable device 110 both monitors the output voltage Vout and monitors a sensed current (e.g., at current sense resistor 125) with respect to a threshold current.

For example, the switching regulator 103 may be a current-controlled regulator in which a threshold current is set using a current sense resistor 125. The programmable device 110 may adjust the PWM (e.g., adjust the control signal 141) based on whether the sensed current at the current sense resistor 125 is equal to or greater than the threshold current. For example, the programmable device 110 may modify the PWM (e.g., adjust the control signal 141) when the sensed current at the current sense resistor 125 is equal to or greater than the threshold current.

The switching regulator 103 may support providing an analog or digital representation of the sensed current to the programmable device 110. In some embodiments, the switching regulator 103 may utilize the ADC circuit 130 for current sensing and for providing a digital representation of the sensed current to the programmable device 110. The ADC circuit 130 may be an isolated sigma-delta modulator (ADC). The ADC circuit 130 may encode an analog signal (e.g., the sensed current) using high-frequency delta-sigma modulation and apply a digital filter to demodulate the encoded signal to a high-bit digital output (also referred to herein as a digital representation) (e.g., signal 133) at a lower sampling-frequency. The ADC circuit 130 may provide signal 133 to the programmable device 110, via the isolator 115. The signal 133 may also be referred to herein as a current sense input provided to (and received at) the programmable device 110.

In some alternative and/or additional embodiments, the switching regulator 103 may support conveying the sensed current to the programmable device 110 through an optocoupler (e.g., using an analog signal corresponding to the sensed current) or a discrete signal corresponding to the sensed current.

In some aspects, for the switching regulator 103, under voltage detection, startup circuitry and auxiliary winding will be referenced to the return path (or primary ground) of the primary side of the transformer T1. The auxiliary winding is configured to supply power suitable for operation of both the analogue and digital circuits on the primary side.

The power supply 101 and switching regulator 103 may support features for enabling (reenabling) the PWM controller 105 in response to the output voltage Vout decreasing to a value below the threshold voltage. In an example, in response to the input voltage Vin decreasing to a given value, the output voltage Vout may accordingly decrease to below the threshold voltage. In the example of enabling (reenabling) the PWM controller 105, in response to detecting the output voltage Vout is below the threshold voltage, the programmable device 110 may provide the control signal 142 according to a second logic level (e.g., a logic level low) associated with enabling the PWM controller 105, and the programmable device 110 may discontinue from providing the control signal 141 to the gate driver 120.

The PWM controller 105, in response to the control signal 142 of the second logic level, may resume control of the power supply 101 and the switching regulator 103. In some other embodiments, the programmable device 110 may refrain from sending any control signal 142, and in response to detecting that no control signal 142 is being sent by the programmable device 110, the PWM controller 105 may resume control of the power supply 101 and the switching regulator 103. For example, the PWM controller 105 may resume providing gate drive signal 121 to the MOSFET M1 and/or to the programmable device 110.

According to one or more embodiments of the present disclosure, the programmable device 110 may remain in a standby state when the output voltage Vout is below the threshold value. The programmable device 110 may enter an active state (e.g., associated with controlling the power supply 101 as described herein) (or alternatively, a powered on state) when the output voltage Vout is greater than or equal to the threshold value. For example, the threshold value may be a voltage value at which circuitry of the programmable device 110 powers on. In some aspects, the programmable device 110 may return to the standby state when the output voltage Vout decreases to a value below the threshold value. The standby state may be, for example, a low power state or a powered off state. The active state may be, for example, a powered on state.

According to one or more embodiments of the present disclosure, the PWM controller 105 may enter a standby state in response to receiving the control signal 142 according to the logic level (e.g., a logic level high) associated with disabling the PWM controller 105. The PWM controller 105 may enter or return to an active state associated with controlling the output voltage Vout in response to receiving the control signal 142 according to the logic level (e.g., a logic level low) associated with enabling the PWM controller 105. Additionally, or alternatively, the PWM controller 105 may enter or return to the active state in response to the programmable device 110 refraining from sending any control signal 142. The standby state may be, for example, a low power state or a powered off state. The active state may be, for example, a powered on state.

Non-limiting examples of advantages provided by the switching regulator 103 are described herein. The switching regulator 103 exhibits dynamic control over both switching frequency and PWM pattern, enabling precise voltage regulation and reducing peak emissions at specific frequencies. The switching regulator 103 can leverage various techniques to address EMI concerns by dynamically modulating the switching frequency within a specified range, dispersing peak emissions, and mitigating the impact of the peak emissions at discrete frequencies.

Aspects of the switching regulator 103 enable the programmable device 110 to comprehensively record performance data of the power supply 101 for prognostic and health monitoring purposes. Non-limiting examples of the performance data may include change in PWM or duty cycle compared to regular operation, change in response time of components of the power supply 101, and the like. Aspects of the programmable device 110 provide advantages of continuous monitoring of supply generation by the power supply 101.

Aspects of the switching regulator 103 support reduced reliance on PWM controller manufacturers, with added benefits of porting specialized features with reduced risk of component obsolescence. For example, the features described herein may be logically implemented on any suitable programmable device, with no dependence on specialized hardware.

Aspects of the switching regulator 103 support power supply output characteristics which are insensitive to component and temperature variations. For example, once control of the power supply 101 is taken over by the programmable device 110, the programmable device 110 may adjust parameters (e.g., PWM, control signal 141) for compensating for any component and/or temperature variations.

The switching regulator 103 provides a combination of advanced control and monitoring capabilities, and the switching regulator 103 provides dedicated EMI mitigation techniques, features which provide promising solutions for demanding power supply applications. In some aspects, as the programmable device 110 is capable of monitoring and looking back at the output voltage Vout, the programmable device 110 may correspondingly estimate and monitor the input voltage Vin (e.g., based at least in part on the device ratio of the transformer T1 and the output voltage Vout), without any additional circuitry (not illustrated) for directly monitoring the input voltage Vin.

As described herein, aspects of the switching regulator 103 present significant advancements in power supply design.

Overcoming Vendor Dependency: The systems and techniques described herein provide a programmable device 110 located on the galvanically isolated secondary side of a power supply 101. The systems and techniques described herein eliminate reliance on the features of a primary side control PWM controller (e.g., PWM controller 105 described herein), enabling more resilient designs with improved control over supply regulation.

Enhanced Prognostics and Health Monitoring: The systems and techniques described herein support comprehensive data logging which facilitates superior prognostics and health monitoring capabilities.

Dynamic Control of Emission Spectrum: The systems and techniques described herein leverage the capabilities of the programmable device 110, which supports and provides for dynamic adjustments to switching frequency and patterns. The dynamic adjustment capabilities support effectively spreading of peak emissions, reducing the impact of peak emissions on specific frequencies.

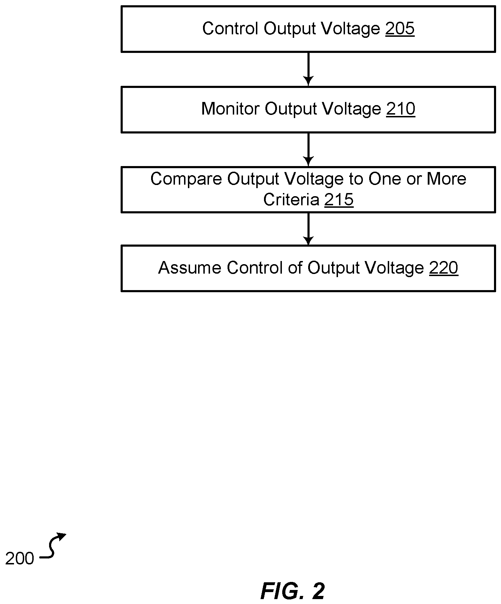

FIG. 2 illustrates an example flowchart of a method 200 in accordance with one or more embodiments of the present disclosure. The method 200 may be implemented by the example aspects of a switching regulator 103 described herein.

At 205, the method 200 may include controlling, by a pulse width modulation controller of a voltage regulator, an output voltage of a power supply.

At 210, the method 200 may include monitoring, by a programmable device of the power supply, the output voltage of the power supply.

At 215, the method 200 may include comparing, by the programmable device, the output voltage of the power supply to one or more criteria.

At 220, the method 200 may include assuming control of the output voltage of the power supply, by the programmable device, based on the comparing.

In some aspects, the one or more criteria includes at least one of: a threshold voltage; and a threshold voltage stability.

In some aspects, the method 200 may include, in association with assuming control of the output voltage of the power supply by the programmable device: generating, by the programmable device, a second pulse width modulation signal synchronized with a first pulse width modulation signal generated by the pulse width modulation controller; and controlling, by the programmable device, the output voltage of the power supply based on the second pulse width modulation signal.

In some aspects, the method 200 may include, in association with assuming control of the output voltage of the power supply by the programmable device: outputting, by the programmable device, a control signal to the pulse width modulation controller; and refraining from controlling the output voltage of the power supply, by the pulse width modulation controller, based on the control signal.

**In** some aspects, the method 200 may include providing, by a current sensing device, a sensed current associated with providing the output voltage. The method 200 may include generating or modifying, by the programmable device, a pulse width modulation signal associated with controlling the output voltage of the power supply, based on the sensed current.

**In** some aspects, the method 200 may include refraining, by the programmable device, from controlling the output voltage of the power supply based on the comparing of the output voltage of the power supply to the one or more criteria.

**In** the descriptions of the flowcharts herein, the operations may be performed in a different order than the order shown, or the operations may be performed in different orders or at different times. Certain operations may also be left out of the flowcharts, one or more operations may be repeated, or other operations may be added to the flowcharts.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

The corresponding structures, materials, acts and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the technical concepts in the form disclosed. Many modifications and variations will be apparent to those of ordinary skill in the art without departing from the scope and spirit of the disclosure. The embodiments were chosen and described in order to best explain the principles of the disclosure and the practical application and to enable others of ordinary skill in the art to understand the disclosure for various embodiments with various modifications as are suited to the particular use contemplated.

While the various embodiments to the disclosure have been described, it will be understood that those skilled in the art, both now and in the future, may make various improvements and enhancements which fall within the scope of the claims which follow. These claims should be construed to maintain the proper protection for the disclosure first described.

## Claims

1. A voltage regulator comprising:
a pulse width modulation controller configured to control an output voltage of a power supply; and
a programmable device (110) configured to monitor the output voltage of the power supply, wherein the programmable device (110) is configured to assume control of the output voltage of the power supply based on a comparison by the programmable device (110) of the output voltage of the power supply to one or more criteria.

2. The voltage regulator of claim 1, wherein the one or more criteria comprises a threshold voltage; and/or
wherein the one or more criteria comprises a threshold voltage stability.

3. The voltage regulator of claim 1 or 2, wherein in association with the programmable device (110) assuming control of the output voltage of the power supply, the programmable device (110) is configured to:
generate a second pulse width modulation signal synchronized with a first pulse width modulation signal generated by the pulse width modulation controller; and
control the output voltage of the power supply based on the second pulse width modulation signal, and optionally wherein the second pulse width modulation signal and the first pulse width modulation signal are synchronized according to frequency, duty cycle, or both.

4. The voltage regulator of any preceding claim, wherein in association with the programmable device (110) assuming control of the output voltage of the power supply, the programmable device (110) is configured to:
output a control signal to the pulse width modulation controller,
wherein the pulse width modulation controller is configured to refrain from controlling the output voltage of the power supply, based on the control signal, and optionally wherein:
the pulse width modulation controller controlling the output voltage of the power supply is associated with an active state of the pulse width modulation controller; and
the pulse width modulation controller refraining from controlling the output voltage of the power supply is associated with a standby state of the pulse width modulation controller.

5. The voltage regulator of any preceding claim, further comprising a current sensing device configured to provide a sensed current associated with providing the output voltage,
wherein the programmable device (110) is configured to generate or modify a pulse width modulation signal associated with controlling the output voltage of the power supply, based on the sensed current, and optionally further comprising:
an analog-to-digital conversion circuit configured to generate a digital representation of the sensed current,
wherein the programmable device (110) is configured to generate or modify the pulse width modulation signal based on the digital representation.

6. The voltage regulator of any preceding claim, wherein the programmable device (110) is configured to refrain from controlling the output voltage of the power supply based on the comparison by the programmable device (110) of the output voltage of the power supply to the one or more criteria, and optionally wherein:
the programmable device (110) controlling the output voltage of the power supply is associated with an active state of the programmable device (110); and
the programmable device (110) refraining from controlling the output voltage of the power supply is associated with a standby state of the programmable device (110).

7. The voltage regulator of any preceding claim, further comprising a transformer configured to generate the output voltage based on an input voltage received at the voltage regulator, wherein:
the pulse width modulation controller is associated with a primary side of the transformer; and
the programmable device (110) is associated with a secondary side of the transformer.

8. An apparatus comprising:
the voltage regulator, as claimed in claim 1.

9. The apparatus of claim 8, further comprising a control device configured to control one or more functions of the apparatus, wherein the programmable device (110) is comprised in a portion of the control device.

10. A method comprising:
controlling, by a pulse width modulation controller of a voltage regulator, an output voltage of a power supply;
monitoring, by a programmable device (110) of the power supply, the output voltage of the power supply;
comparing, by the programmable device (110), the output voltage of the power supply to one or more criteria; and
assuming control of the output voltage of the power supply, by the programmable device (110), based on the comparing.

11. The method of claim 10, wherein the one or more criteria comprises at least one of:
a threshold voltage; and
a threshold voltage stability.

12. The method of claim 10 or 11, further comprising, in association with assuming control of the output voltage of the power supply by the programmable device (110):
generating, by the programmable device (110), a second pulse width modulation signal synchronized with a first pulse width modulation signal generated by the pulse width modulation controller; and
controlling, by the programmable device (110), the output voltage of the power supply based on the second pulse width modulation signal.

13. The method of any of claims 10-12, further comprising, in association with assuming control of the output voltage of the power supply by the programmable device (110):
outputting, by the programmable device (110), a control signal to the pulse width modulation controller; and
refraining from controlling the output voltage of the power supply, by the pulse width modulation controller, based on the control signal.

14. The method of any of claims 10-13, further comprising:
providing, by a current sensing device, a sensed current associated with providing the output voltage; and
generating or modifying, by the programmable device (110), a pulse width modulation signal associated with controlling the output voltage of the power supply, based on the sensed current.

15. The method of any of claims 10-14, further comprising:
refraining, by the programmable device (110), from controlling the output voltage of the power supply based on the comparing of the output voltage of the power supply to the one or more criteria.
